(19) Europäisches Patentamt
European Patent Office
Office européen des brevets

(11) **EP 4 711 745 A1**

(12) **EUROPEAN PATENT APPLICATION**
published in accordance with Art. 153(4) EPC

(43) Date of publication:
**18.03.2026  Bulletin 2026/12**

(21) Application number: **24873037.6**

(22) Date of filing: **27.09.2024**

(51) International Patent Classification (IPC):
***G01N 21/25*** (2006.01)    ***G01N 21/47*** (2006.01)
***H01M 10/42*** (2006.01)    ***H01M 4/04*** (2006.01)

(52) Cooperative Patent Classification (CPC):
**G01N 21/25; G01N 21/47; H01M 4/04; H01M 10/42;
Y02E 60/10**

(86) International application number:
**PCT/KR2024/014721**

(87) International publication number:
**WO 2025/071330 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023  KR 20230130823
26.09.2024  KR 20240130870**

(71) Applicant: **LG Energy Solution, Ltd.
Seoul 07335 (KR)**

(72) Inventors:
• **LEE, Junghyoung
  Daejeon 34122 (KR)**
• **LEE, Sung Ho
  Daejeon 34122 (KR)**
• **SON, Jin Young
  Daejeon 34122 (KR)**
• **LEE, Won Chang
  Daejeon 34122 (KR)**
• **CHOI, Hyeon
  Daejeon 34122 (KR)**

(74) Representative: **Plasseraud IP
104 Rue de Richelieu
CS92104
75080 Paris Cedex 02 (FR)**

(54) **APPARATUS FOR INSPECTING DRYNESS OF ELECTRODE, METHOD FOR INSPECTING DRYNESS OF ELECTRODE, AND METHOD FOR MANUFACTURING ELECTRODE AND SECONDARY BATTERY**

(57)    According to an embodiment of the present disclosure, provided is a device for inspecting the dryness of an electrode, comprising:
a transport unit that transports the electrode to an electrode drying zone,
an irradiation unit including a collimating lens which is fixed in a state of being tilted by 10 to 20 degrees with respect to the direction perpendicular to the transport direction of the electrode at an upper part separated from the electrode, and an optical fiber that irradiates a light source through the collimating lens, a measurement unit including a spectrometer and a light source respectively connected to the irradiation unit, and a spectrometer hub connected to the spectrometer, and a control unit including a display device connected to the spectrometer hub, a method for inspecting the electrode dryness that predicts electrode dryness from the measured reflectance through the device for inspecting the dryness of an electrode, a method for manufacturing an electrode for a secondary battery to which the electrode dryness inspecting method is applied, and a method for manufacturing a secondary battery including the same.

**(Cont. next page)**

FIG. 3

**Description**

**[TECHNICAL** FIELD]

Cross-Reference to Related Application(s)

This application claims priority to and the benefit of Korean Patent Application No. 10-2023-0130823, filed on September 27, 2023, and Korean Patent Application No. 10-2024-0130870, filed on September 26, 2024, with the Korean Intellectual Property Office, the disclosures of which are incorporated herein by reference in their entirety.

The present disclosure relates to an electrode dryness inspecting device, an electrode dryness inspecting method, and a method for manufacturing an electrode and a secondary battery.

[BACKGROUND]

As technologies for mobile devices are developed, and demand for the mobile devices increases, there has been a rapid increase in demand for secondary batteries as energy sources. In particularly, secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer, and a wearable device.

The secondary battery is manufactured by incorporating an electrode assembly together with an electrolyte in a secondary battery case, wherein the electrode assembly is manufactured by stacking and/or winding a positive electrode, a separator, and negative electrode.

At this time, the electrodes such as the positive electrode and the negative electrode are manufactured by mixing materials such as an active material, a conductive material, and a binder with a solvent to prepare a slurry, which is then applied to a current collector and dried. Here, the drying is performed by passing the electrode through a plurality of drying zones. At this time, the degree of dryness of each electrode was evaluated by visually inspecting the constant rate section of each drying zone. However, since there are differences depending for each worker in this visual inspection, an objective judgment method was considered, and therefore, a measurement method utilizing the reflectance of the electrode was developed.

Evaluation of the degree of dryness through the electrode reflectance measurement is performed by comparing the reflectance of the electrode that has completed dried with that of an electrode that is being dried. However, according to a conventional electrode reflectance measurement method, the measurement angle changes due to shaking during the electrode drying running, while the effective measurement angle is extremely narrow in range to cause a lot of noise, which limits the accurate measurement of the degree of dryness of the electrode.

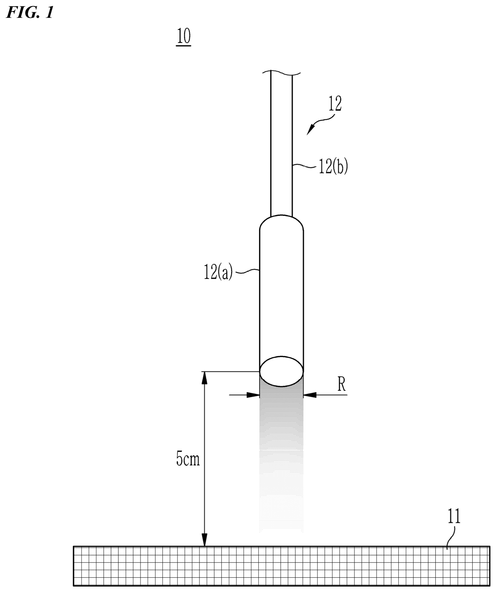

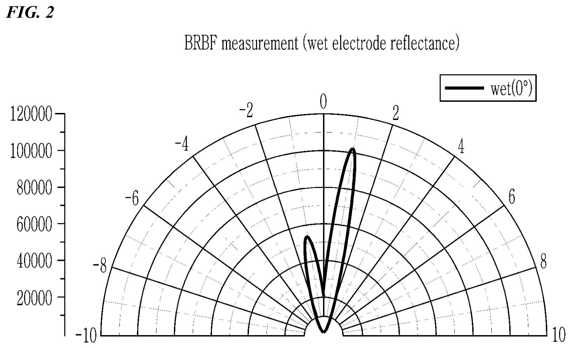

To explain this, FIG. 1 shows a schematic diagram of a portion of a conventional electrode reflectance measurement device, and FIG. 2 shows a graph of the BRDF (Bidirectional Reflectance Distribution Function) measurement result values measured using the conventional measurement device.

Referring to FIG. 1, the conventional electrode reflectance measuring device 10 is based on the concept of measuring a specular reflection, wherein the electrode 11 is transferred in the progress direction of coating, and an optical fiber 12(b) and a collimating lens 12(a) are located so that the light source is irradiated vertically at a predetermined distance (about 5 cm) based on the transfer direction of the electrode, thereby measuring the vertical reflectance. The sample that was completely dried was defined as having 100% reflectance, and then the electrode drying state is judged in two areas: specular reflection and diffuse reflection.

At this time, since the light source is irradiated in the vertical direction, the diameter of the collimating lens is set to about 5 mm.

However, referring to FIG. 2, it can be confirmed that the electrode reflectance measured by this measurement method has a very narrow range where the effective measurement angle is about ±0.7 degrees, but the measurement angle changes by an average of 2 degrees and a maximum of 4 degrees due to the shaking of the electrode when the coating linear speed increases, thereby making measurement very difficult.

Furthermore, when a specular reflection is used, wet electrodes that are not yet completely dried have the problem that incident light is absorbed or lost inside the electrode due to total internal reflection, and does not contribute to the reflectance.

Therefore, there is a need to develop a method that can resolve this problem and confirm the dryness without being affected by changes in measurement angle caused by the occurrence of electrode shaking, as well as a method for manufacturing an electrode using the method.

**[DETAILED DESCRIPTION OF THE INVENTION]**

**[Technical Problem]**

The present disclosure is designed to solve the above-mentioned problems, and therefore an object of the present disclosure is to provide a device and method for inspecting an electrode dryness which uses diffuse reflection to eliminate the effects of changes in measurement angle caused by electrode shaking during electrode drying and can inspect the drying state in real time through the reflectance of the electrode.

It is another object of the present disclosure to provide a method for manufacturing an electrode that can inspect the electrode dryness in real time and change the drying conditions by applying it, and a method for manufacturing a secondary battery including the same.

**[Technical Solution]**

According to an embodiment of the present disclosure, there is provided a device for inspecting the dryness of an electrode for a secondary battery, the device comprising:

a transport unit that transports the electrode to an electrode drying zone,
an irradiation unit including a collimating lens which is fixed in a state of being tilted by 10 to 20 degrees with respect to the direction perpendicular to the transport direction of the electrode at an upper part separated from the electrode, and an optical fiber that irradiates a light source through the collimating lens,
a measurement unit including a spectrometer and a light source respectively connected to the irradiation unit, and a spectrometer hub connected to the spectrometer, and
a control unit including a display device connected to the spectrometer hub.

According to another embodiment of the present disclosure, there is provided a method for inspecting the degree of dryness of an electrode, in which:

when the electrode passes through the electrode drying zone, a light source is irradiated through a collimating lens that is tilted at an angle of 10 to 20 degrees with respect to a direction perpendicular to the transport direction of the electrode at an upper part separated from the electrode, the light intensity that the electrode reflects a light source is measured through a spectrometer, and the reflectance obtained from the following Equation 1 is measured in real time through a spectrometer hub based on the measured values to predict the degree of dryness of the electrode.

[Equation 1]

$$\text{Reflectance} = \frac{\text{Measured Intensity} - \text{Dark Intensity}}{\text{Ref Intensity} - \text{Dark Intensity}} * 100$$

wherein in Equation 1,
the measured intensity is the total intensity reflected by the electrode when a light source is irradiated through the collimating lens from the upper part of the electrode,
the dark intensity is the lens reflection intensity obtained when a light source is irradiated to the collimating lens from the upper part of the electrode, and
the reference intensity is a value determined by a diffuse reflectance standard.

According to yet another embodiment of the present disclosure, there is provided a method for manufacturing an electrode for a secondary battery, the method comprising:

a coating step of applying an electrode slurry containing an active material, a conductive material, and a binder to one surface or both surfaces of a current collector, and a step of drying the applied slurry,
wherein the drying is performed by transporting the undried electrode, on which the electrode slurry is applied onto one surface or both surfaces of the current collector, and passing it through the drying zone, and
wherein the drying is performed by measuring the electrode reflectance in real time using an irradiation unit including a collimating lens which is fixed in a state of being tilted by 10 to 20 degrees with respect to the direction perpendicular to the transport direction of the electrode at an upper part separated from the electrode formed in the drying zone, and an optical fiber that irradiates a light source through the collimating lens, and changing the electrode drying conditions.

According to yet another embodiment of the present disclosure, there is provided a method for manufacturing a secondary battery comprising the method for manufacturing an electrode.

**[BRIEF DESCRIPTION OF THE DRAWING]**

FIG. 1 shows a schematic diagram of a portion of a conventional electrode reflectance measurement device.
FIG. 2 is a graph showing the BRDF measurement result values measured using the conventional measurement device of FIG. 1.
FIG. 3 is a schematic diagram of an electrode dryness inspecting device according to an embodiment of the present disclosure.
FIG. 4 is a partial schematic diagram of an electrode dryness inspecting device of FIG. 3.
FIG. 5 is a BRDF measurement graph measured through the electrode dryness inspecting device of FIG. 3.
FIG. 6 is a graph of electrode reflectance measurement according to Example 1 of the present disclosure.
FIG. 7 is a schematic diagram showing the electrode dryness according to the reflectance of FIG. 6.

**[DETAILED DESCRIPTION OF THE EMBODIMENTS]**

Hereinafter, embodiments of the present disclosure will be described in more detail to assist in understanding the present disclosure.

The terms used herein are provided to describe exemplary embodiments but are not intended to limit the inventive concept. The singular forms include plural forms unless the context clearly indicates otherwise.

Throughout the descriptions herein, when a certain part "includes" a component, this does not indicate that the certain part excludes other components, but indicates that the part may further include other components, unless otherwise defined.

According to an embodiment of the present disclosure, there is provided a device for inspecting the dryness of an electrode for a secondary battery, the device comprising:

a transport unit that transports the electrode to an electrode drying zone,
an irradiation unit including a collimating lens which is fixed in a state of being tilted 10 to 20 degrees with respect to the direction perpendicular to the transport direction of the electrode at an upper part separated from the electrode, and an optical fiber that irradiates a light source through the collimating lens,
a measurement unit including a spectrometer and a light source respectively connected to the irradiation unit, and a spectrometer hub connected to the spectrometer, and
a control unit including a display device connected to the spectrometer hub.

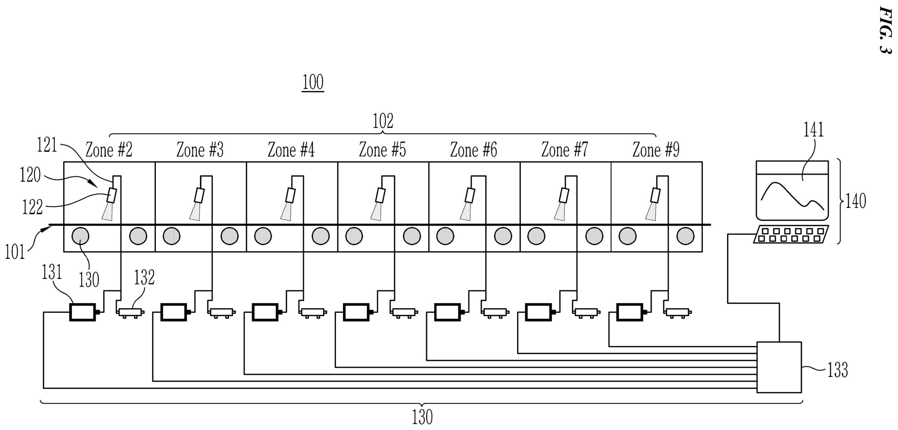

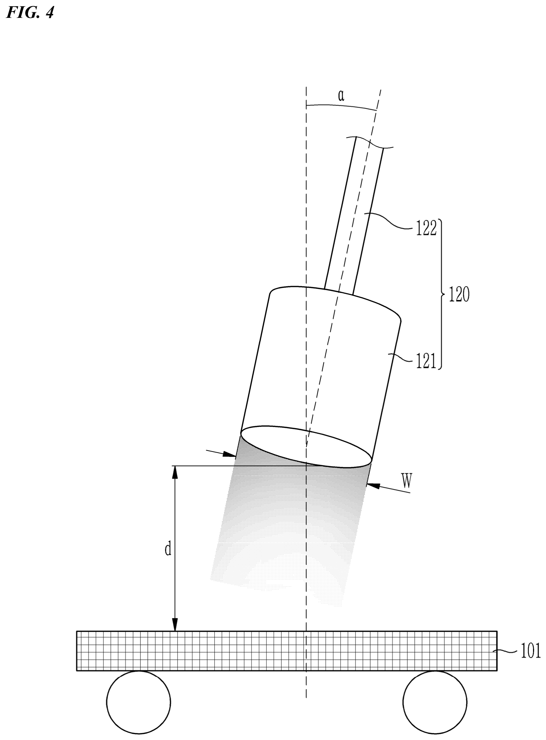

FIG. 3 shows a schematic diagram of such an electrode dryness inspecting device, and FIG. 4 shows a schematic diagram of a portion of the inspection device to explain in more detail the light source irradiation unit in such an electrode dryness inspecting device.

First, referring to FIG. 3, the electrode dryness inspecting device 100 includes a transport unit 110 that transports the electrode 101 to an electrode drying zone 102, an irradiation unit 120 including a collimating lens 121 which is fixed in a state of being tilted with respect to the direction perpendicular to the transport direction of the electrode 101 at an upper part separated from the electrode 101, and an optical fiber 122 that irradiates a light source through the collimating lens 121, a measurement unit 130 including a spectrometer 131 and a light source 132 respectively connected to the irradiation unit 120, and a spectrometer hub 133 connected to the spectrometer 131, and a control unit 140 including a display device 141 connected to the spectrometer hub 133.

Referring to FIG. 4, the irradiation unit 120 will be described in more detail.

According to the present disclosure, in the irradiation unit 120, the collimating lens 121 and the optical fiber 122 may be tilted at an angle(a) of 10 to 20 degrees with respect to the direction perpendicular to the transport direction of the electrode 101.

That is, according to the present disclosure, the light source is irradiated onto the electrode 101 in a state of being tilted at an angle of 10 to 20 degrees, and more specifically, the angle(a) of tilt may be 10 to 15 degrees.

From the above, the present disclosure can calculate the electrode reflectance using only diffuse reflection other than specular reflection. Thereby, since the measurement itself is performed in a tilted state, it is not affected by changes in the measurement angle due to occurrence of shaking during electrode transport.

If it is tilted by less than 10 degrees outside the above range, specular reflection components may be detected, which may cause errors in the reflectance measurement, and if it is greater than the above range and exceeds 20 degrees, it is difficult to distinguish between the metal foil as the electrode current collector used in the electrode and the wet electrode, which is not preferable.

In this way, according to the present disclosure, the light source is irradiated at a tilted angle(a) to measure the reflectance, so that the electrode reflectance is measured in real time without being affected by the shaking of the electrode, thereby making it possible to easily and accurately inspect the degree of electrode dryness.

At this time, the collimating lens 121 irradiates the light source through the optical fiber in a tilted form, and thus can have a larger diameter(w), specifically 5 mm to 50 mm, more specifically 10 mm to 40 mm, and most specifically 10 mm to 20 mm.

If the diameter(w) is too small outside the above range, it is difficult to accurately measure the electrode reflectance because the light quantity is small, and if the diameter is too large, the light source irradiation range may become too wide, which is not preferable.

Further, the irradiation of the light source through the collimating lens 121 can be performed at a position separated from the electrode 101. Therefore, the distance(d) between the collimating lens 121 and the electrode 101 may be 3cm to 10cm, specifically 3cm to 5cm.

If the distance(d) is too close outside the above range, physical interference with the electrode during the process may occur, which may result in electrode breakage problems, and if the distance is too far, the light source range may be too wide, thereby making it difficult to accurately irradiate the desired area, which is not preferable.

Furthermore, although not shown in the figure, the collimating lens 121 may have an anti-reflective(AR) coating lens formed on its surface. If the anti-reflective coating lens is not formed, lens reflection may increase, and a large amount of reflectance noise may occur in the wet electrode, which is not preferable.

At this time, the wavelength range of the anti-reflective(AR) coating lens may be 680nm to 1050nm, and the average reflectance may be 0.5% or less.

Although it is outside the above range, the thickness of such an anti-reflective coating lens can be appropriately selected taking into account the diameter of the collimating lens. The wavelength range is influenced by the irradiation of the light source through the optical fiber 122 and is selected to correspond to the wavelength range of the optical fiber. if the reflectance is large outside the above range, it is difficult to sufficiently remove the reflection component of the collimating lens, which is not preferable.

Meanwhile, the optical fiber 122 that irradiates the light source through the collimating lens 121 may have an average diameter of $200\mu m$ to $800\mu m$, specifically, $400\mu m$ to $800\mu m$, more specifically, $500\mu m$ to $800\mu m$, and most specifically, $600\mu m$ to 800,um.

If the average diameter is small outside the above range, the light quantity may be too small, which may make it difficult to measure the reflectance, and if the average diameter is too large, manufacturing and efficiency may be problematic.

In addition, the light source power varies depending on the device, and for example, it can be irradiated in the range of 5W to 200W, and the lifetime is preferably 2000 hours or more. At this time, if the power of the light source device itself is not high, the light quantity can be increased by increasing the diameter of the optical fiber to about $600\mu m$, thereby measuring the electrode reflectance.

As another important factor, the light wavelength range of the optical fiber can be 680nm to 1050nm. The wavelength corresponds to a wavelength corresponding to near-infrared rays, and the wavelength range is not limited, but when the electrode 101 passes through the drying zone 102, a situation may often occur where a window or door is opened for visual confirmation by workers. Thus, when using light with a wavelength value in the visible light range, the electrode reflectance may be affected by interference from external light, so it is most preferable to use it in the near-infrared range so as not to affect such external light.

Referring again to FIG. 3, this irradiation unit 120 is connected to a spectrometer and a light source, and the spectrometer measures the reflectance of the electrode according to the light source irradiation, and the resulting value is displayed on the display device 141.

At this time, in general, in order to inspect the degree of dryness of the electrode 101, it is important to know how much degree of dryness of the electrode is appeared when passing through the drying furnace, that is, at the end part of the drying oven when drying is complete. Therefore, it is preferable that the irradiation unit 120 of the main inspection device 100 is formed at the end of the electrode drying zone 102.

Meanwhile, drying of the electrode 101 manufactured in actual mass production is not completed by passing through one drying zone, but is sequentially dried while passing through multiple drying zones.

Therefore, two or more electrode drying zones 102 may be formed in the transport direction of the electrode 101. The electrode dryness inspecting device 100 according to the present disclosure measures the reflectance of each of the drying zones #2 to #9, and determines the degree of dryness of the electrode as it passes through each drying zone. For this purpose, two or more irradiation units including a collimating lens 121 and an optical fiber 122, a spectrometer 131 and a light source 131 are respectively separated and formed at the end of each drying zone, and the values obtained from these are displayed in real time on the control unit via the spectrometer hub, which makes it possible to confirm the drying state of the electrodes in real time, thereby making drying design easy.

Meanwhile, according to another embodiment of the present disclosure, a method for inspecting the degree of dryness of an electrode using the inspection device is provided.

Specifically, when the electrode passes through the electrode drying zone, a light source is irradiated through a collimating lens that is tilted at an angle of 10 to 20 degrees with respect to a direction perpendicular to the transport direction of the electrode at an upper part separated from the electrode, the light intensity obtained therefrom is measured through a spectrometer, and the reflectance obtained from the following Equation 1 is measured in real time through a spectrometer hub based on the measured values to predict the degree of dryness of the electrode.

[Equation 1]

$$\text{Reflectance} = \frac{\text{Measured Intensity - Dark Intensity}}{\text{Ref Intensity - Dark Intensity}} * 100$$

wherein in Equation 1,
the measured intensity is the total intensity reflected by the electrode when a light source is irradiated through the collimating lens from the upper part of the electrode,
the dark intensity is the lens reflection intensity obtained when a light source is irradiated to the collimating lens from the upper part of the electrode, and
the reference intensity is a value determined by a diffuse reflectance standard.

That is, according to the electrode dryness inspecting method of the present disclosure, as described in the inspection device, when a light source is irradiated through a collimating lens, the collimating lens and the optical fiber are fixed and installed at a specific angle to measure the electrode reflectance by diffuse reflection, and the degree of electrode dryness is predicted from this.

At this time, the electrode reflectance is calculated by the method of the Equation 1, and is displayed in real time to the control unit through the spectrometer hub.

Specifically, the electrode reflectance can be calculated from the value obtained by subtracting the dark intensity from the total light irradiation intensity measured by irradiation with the light source.

Here, the dark intensity is generally a value obtained in a state where the light source is turned off, whereas according to the present disclosure, it is intended to remove components reflected by the collimating lens itself, and is a value measured by setting the tilt value to 10 degrees or more in a state where the light source is turned on. Specifically, in a state where the light source is turned on, that is, in a state where the light source is irradiated on the collimating lens, the dark intensity is a lens reflection intensity obtained by the reflection, which is a value measured from a tilt value of 10 degrees or more, specifically in the range of 10 degrees to 20 degrees.

From this, the reflectance of the electrode of the present disclosure is obtained as a percentage value obtained by dividing the light intensity obtained from the actual electrode by the reference intensity minus the dark intensity.

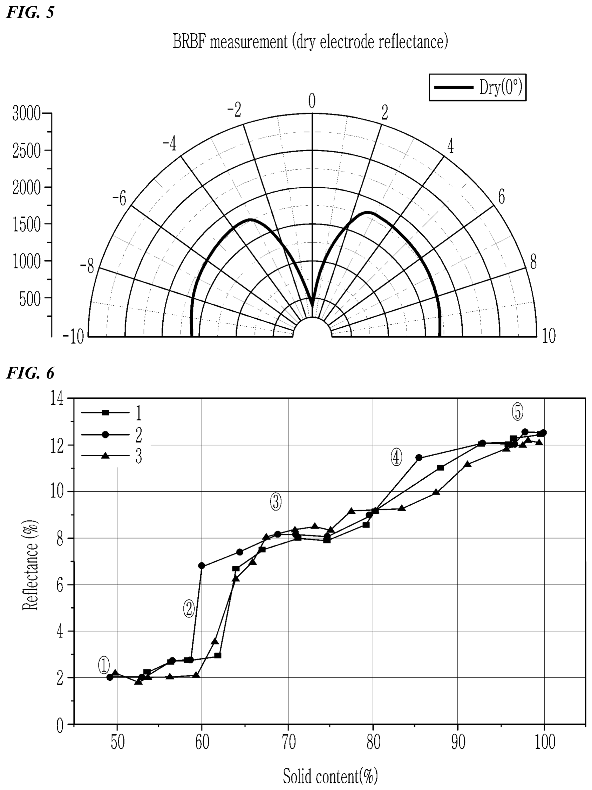

The BRDF graph measured in this way is shown in FIG. 5 below.

Referring to FIG. 5, the reflectance value obtained by the reflectance measurement value through diffuse reflection according to the present disclosure has a very wide effective angle of 20 degrees, and the reflectance measured according to the present disclosure is not affected by the degree of change in the measurement angle due to the shaking caused by the transport of the electrode, thereby being able to be obtained reliably.

Here, the reference intensity (Ref Intensity) can be specifically a value obtained from Ocean Insight, WS-1-SL using a standard sample with a Diffuse Reflectance of 99% (Nominal Reflectance, 350-1600 nm) and an NIST (National Institute of Standards and Technology) certified sample.

Meanwhile, the device-related explanations for other collimating lenses, optical fibers, etc. are as described above.

Further, the electrode dryness inspecting method of the present disclosure can also predict the degree of dryness from the reflectance obtained at the end of the drying zone, wherein the drying zone is formed by two or more zones, and the reflectance is measured at the end of each drying zone, whereby the degree of electrode dryness when passing through each drying zone can be predicted, thereby making it possible to easily design a drying process.

Meanwhile, according to another embodiment of the present disclosure, a method for manufacturing an electrode for a secondary battery using the electrode dryness inspecting method is provided.

Specifically, the method for manufacturing an electrode for a secondary battery, the method comprising:

a coating step of applying an electrode slurry containing an active material, a conductive material, and a binder to one surface or both surfaces of a current collector, and a step of drying the applied slurry,
wherein the drying is performed by transporting the undried electrode, on which the electrode slurry is applied onto one surface or both surfaces of the current collector, and passing it through the drying zone, and
wherein the drying is performed by measuring the electrode reflectance in real time using an irradiation unit including a collimating lens which is fixed in a state of being tilted by 10 to 20 degrees with respect to the direction perpendicular to the transport direction of the electrode at an upper part separated from the electrode formed in the drying zone, and an optical fiber that irradiates a light source through the collimating lens, and changing the electrode drying conditions.

In this case, as described in the electrode dryness inspecting method, the electrode reflectance is obtained by measuring the light intensity reflected by the electrode from the light source irradiated by the optical fiber through a spectrometer, and obtained from the following Equation 1 through a spectrometer hub based on the measured values:

[Equation 1]

$$ \text{Reflectance} = \frac{\text{Measured Intensity} - \text{Dark Intensity}}{\text{Ref Intensity} - \text{Dark Intensity}} * 100 $$

wherein in Equation 1,
the measured intensity is the total intensity reflected by the electrode when a light source is irradiated through the collimating lens from the upper part of the electrode,
the dark intensity is the lens reflection intensity obtained when a light source is irradiated to the collimating lens from the upper part of the electrode, and
the reference intensity is a value determined by a diffuse reflectance standard.

Therefore, the electrode manufactured according to an embodiment of the present disclosure can measure the electrode reflectance in real time, and thus the degree of electrode dryness when passing through each drying zone can be predicted, so that the electrode drying conditions within the drying zone can be easily changed and set, which makes it more effective for electrode drying.
Therefore, the electrode reflectance of the electrode manufactured according to this, that is, the electrode after drying, may be 10% or more, and specifically, 10% to 20%. This means that the electrode is completely dried inside, and there may be an error of several percent depending on the electrode material.
In conclusion, the electrode manufactured by the method according to the present disclosure can also improve its quality by sufficiently drying the electrode.
Meanwhile, according to yet another embodiment of the present disclosure, a method for manufacturing a secondary battery comprising an electrode manufactured by the method is provided.
Except for the above electrode manufacturing method, the subsequent secondary battery manufacturing process may include a method disclosed in the prior art.
Below, examples are disclosed to assist in understanding the present disclosure. Specifically, the method of measuring the reflectance using a dryness inspecting device according to the present disclosure and predicting the degree of electrode dryness from the reflectance graph is explained with reference to Experimental Examples. However, the following examples are for illustrative purposes only, and the scope of the present invention is not limited thereto.

<Manufacturing Example 1>

Artificial graphite, binder(SBR), and thickener(CMC) were mixed in a weight ratio of 95:3:2 to prepare a slurry under deionized water, and the slurry was applied to a copper foil to a thickness of 300 $\mu$m to manufacture a wet electrode 1.

<Manufacturing Example 2>

Artificial graphite, binder(SBR), and thickener(CMC) were mixed in a weight ratio of 96:2:2 to prepare a slurry under deionized water, and the slurry was applied to a copper foil to a thickness of 300 $\mu$m to manufacture a wet electrode 2.

<Manufacturing Example 3>

Artificial graphite, binder(SBR), and thickener(CMC) were mixed in a weight ratio of 97:2:1 to prepare a slurry under deionized water, and the slurry was applied to a copper foil to a thickness of 300 $\mu$m to manufacture a wet electrode 3.

<Experimental Example>

And, while passing the wet electrodes 1 to 3 through multiple drying zones as shown in FIG. 3, the electrode drying reflectance was measured at the end of each drying zone by the method according to the present disclosure, and the results are shown in FIG. 6.

Referring to FIG. 6, it can be confirmed that the reflectance of the electrode is divided into a flat section ① where the value is constant from the start of electrode drying, an acceleration section ② where the value increases rapidly, a lull section ③ where the slope decreases again and the change is small, an additional acceleration section ④ where the slope increases again, and a completion section ⑤ where the reflectance change is almost nonexistent.

From this graph, the dryness of the electrode can be predicted from the moisture content in five stages: from a wet state to a state where the surface is dried, a state where the surface drying is completed, a state where the inside is dried, and a state where the inside drying is completed.

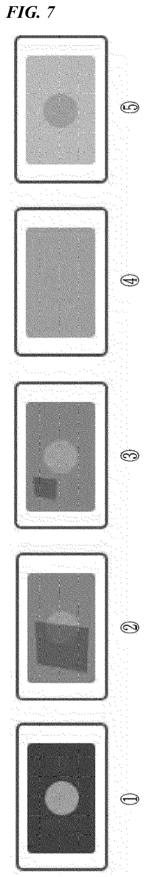

In order to show the degree of dryness so as to correspond to the above graph, FIG. 7 shows a schematic diagram of the degree of electrode dryness.

That is, the flat section ① where the electrode reflectance is constant corresponds to a state where drying has begun and the electrode is still wet, the acceleration section ② where the reflectance increases rapidly corresponds to a state where the electrode surface is dried, the lull section ③ where the slope decreases and the change is small corresponds to a state where surface drying is almost completed and the change in the value is small, the additional acceleration section ④ where the slope increases again corresponds to a state where internal drying has begun and internal drying is taking place, and the completion section ⑤ where there is little change in reflectance corresponds to a state where not only the surface but also the interior has been completely dried. From this, it is possible to reliably predict the degree of electrode dryness and facilitate the design of the drying process.

It will be apparent to those skilled in the art that various modifications and variations can be made in the present disclosure without departing from the spirit and scope of the present disclosure.

**[Industrial Applicability]**

The electrode dryness inspecting device and method according to the embodiments can maintain a constant reflectance even if the measurement angle fluctuates in the reflectance measurement by using only diffuse reflection, which eliminates the influence of angular shaking during electrode transport, and measures the electrode reflectance in real time, thereby easily confirming the electrode dryness state.

In addition, the method for manufacturing an electrode according to the present disclosure can easily confirm the electrode drying state in real time via the electrode reflectance, and thus can dry the electrode while changing electrode drying conditions, thereby increasing drying efficiency and improving the quality of the electrode where drying was completed.

**Claims**

1. A device for inspecting the dryness of an electrode for a secondary battery, the device comprising:

    a transport unit that transports the electrode to an electrode drying zone,
    an irradiation unit including a collimating lens which is fixed in a state of being tilted by 10 to 20 degrees with respect to the direction perpendicular to the transport direction of the electrode at an upper part separated from the electrode, and an optical fiber that irradiates a light source through the collimating lens,
    a measurement unit including a spectrometer and a light source respectively connected to the irradiation unit, and a spectrometer hub connected to the spectrometer, and
    a control unit including a display device connected to the spectrometer hub.

2. The device for inspecting the dryness of an electrode according to claim 1,
    wherein the collimating lens has a diameter of 5 mm to 50 mm and is located in a state of being 3 cm to 10 cm apart from the electrode.

3. The device for inspecting the dryness of an electrode according to claim 1,
    wherein the collimating lens has an anti-reflective(AR) coating lens formed on its surface, the wavelength range of the anti-reflective coating lens is 680 nm to 1050 nm, and the average reflectance is 0.5% or less.

4. The device for inspecting the dryness of an electrode according to claim 1,

wherein the average diameter of the optical fiber is $200\,\mu$m to $800\,\mu$m, and the optical wavelength range of the optical fiber is 680nm to 1050nm.

5. The device for inspecting the dryness of an electrode according to claim 1,
wherein the spectrometer measures the reflectance from the electrode and transmits it to the spectrometer hub, and displays the electrode reflectance in real time on the display device through the spectrometer hub.

6. The device for inspecting the dryness of an electrode according to claim 1,
wherein the irradiation unit is formed at the end of the electrode drying zone.

7. The device for inspecting the dryness of an electrode according to claim 1,
wherein the drying zones are formed by two or more zones in the transport direction of the electrode, and two or more irradiation units are formed at the ends of each drying zone.

8. A method for inspecting the degree of dryness of an electrode, in which:

when the electrode passes through the electrode drying zone, a light source is irradiated through a collimating lens that is tilted at an angle of 10 to 20 degrees with respect to a direction perpendicular to the transport direction of the electrode at an upper part separated from the electrode, the light intensity that the electrode reflects a light source is measured through a spectrometer, and the reflectance obtained from the following Equation 1 is measured in real time through a spectrometer hub based on the measured values to predict the degree of dryness of the electrode.

[Equation 1]

$$\text{Reflectance} = \frac{\text{Measured Intensity} - \text{Dark Intensity}}{\text{Ref Intensity} - \text{Dark Intensity}} * 100$$

wherein in Equation 1,
the measured intensity is the total intensity reflected by the electrode when a light source is irradiated through the collimating lens from the upper part of the electrode,
the dark intensity is the lens reflection intensity obtained when a light source is irradiated to the collimating lens from the upper part of the electrode, and
the reference intensity is a value determined by a diffuse reflectance standard.

9. The method for inspecting the degree of dryness of an electrode according to claim 8,
wherein the collimating lens has an anti-reflective(AR) coating lens formed on its surface, has a diameter of 5 mm to 50 mm, and is located in a state of being 3 cm to 10 cm apart from the electrode.

10. The method for inspecting the degree of dryness of an electrode according to claim 9,
wherein the wavelength range of the anti-reflective coating lens is 680 nm to 1050 nm, and the reflectance is an average of 0.5% or less.

11. The method for inspecting the degree of dryness of an electrode according to claim 8,
wherein the light source is irradiated through an optical fiber having an average diameter of $200\,\mu$m to $800\,\mu$m and an optical wavelength range of 680 nm to 1050 nm.

12. The method for inspecting the degree of dryness of an electrode according to claim 8,
wherein the light source irradiation and the reflectance measurement are performed at the end of the electrode drying zone.

13. The method for inspecting the degree of dryness of an electrode according to claim 12,
wherein the drying zones are formed by two or more zones in the transport direction of the electrode, and the reflectance is measured for each drying zone.

14. A method for manufacturing an electrode for a secondary battery, the method comprising:

a coating step of applying an electrode slurry containing an active material, a conductive material, and a binder to one surface or both surfaces of a current collector, and a step of drying the applied slurry,

wherein the drying is performed by transporting the undried electrode, on which the electrode slurry is applied onto one surface or both surfaces of the current collector, and passing it through the drying zone, and

wherein the drying is performed by measuring the electrode reflectance in real time using an irradiation unit including a collimating lens which is fixed in a state of being tilted by 10 to 20 degrees with respect to the direction perpendicular to the transport direction of the electrode at an upper part separated from the electrode formed in the drying zone, and an optical fiber that irradiates a light source through the collimating lens, and changing the electrode drying conditions.

15. The method for manufacturing an electrode according to claim 14,

wherein the electrode reflectance is obtained by measuring the light intensity reflected by the electrode from the light source irradiated by the optical fiber through a spectrometer, and obtained from the following Equation 1 through a spectrometer hub based on the measured values:

[Equation 1]

$$\text{Reflectance} = \frac{\text{Measured Intensity} - \text{Dark Intensity}}{\text{Ref Intensity} - \text{Dark Intensity}} * 100$$

wherein in Equation 1,

the measured intensity is the total intensity reflected by the electrode when a light source is irradiated through the collimating lens from the upper part of the electrode,

the dark intensity is the lens reflection intensity obtained when a light source is irradiated to the collimating lens from the upper part of the electrode, and

the reference intensity is a value determined by a diffuse reflectance standard.

16. The method for manufacturing an electrode according to claim 14,
wherein the drying zones are formed by two or more zones in the transport direction of the electrode.

17. The method for manufacturing an electrode according to claim 14,
wherein then the drying is completed, the electrode reflectance is 10% or more.

18. A method for manufacturing a secondary battery comprising the method for manufacturing an electrode according to claim 14.

**FIG. 1**

FIG. 2

BRBF measurement (wet electrode reflectance)

*FIG. 3*

*FIG. 4*

**FIG. 5**

BRBF measurement (dry electrode reflectance)

**FIG. 6**

*FIG. 7*

# EP 4 711 745 A1

## INTERNATIONAL SEARCH REPORT

International application No.

**PCT/KR2024/014721**

| A. | CLASSIFICATION OF SUBJECT MATTER |
|---|---|

**G01N 21/25**(2006.01)i; **G01N 21/47**(2006.01)i; **H01M 10/42**(2006.01)i; **H01M 4/04**(2006.01)i

According to International Patent Classification (IPC) or to both national classification and IPC

| B. | FIELDS SEARCHED |
|---|---|

Minimum documentation searched (classification system followed by classification symbols)

G01N 21/25(2006.01); G01J 5/08(2006.01); G01N 21/3554(2014.01); G01N 21/55(2006.01); H01M 4/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 건조도(electrode dryness), 이송부(conveyor), 시준 렌즈(collimating lens), 광원(light source), 광 섬유(optical fiber), 분광기(spectrometer), 디스플레이(display)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0097693 A (SFA ENGINEERING CORP.) 08 July 2022 (2022-07-08)<br>See paragraphs [0042]-[0133] and figures 1-3. | 1-18 |
| Y | KR 10-2022-0033312 A (HYUNDAI MOTOR COMPANY et al.) 16 March 2022 (2022-03-16)<br>See paragraphs [0028]-[0037] and figures 2-6. | 1-18 |
| Y | KR 10-2019-0084470 A (LG CHEM, LTD.) 17 July 2019 (2019-07-17)<br>See paragraphs [0058]-[0060] and figures 1 and 2. | 1-7,11,14-18 |
| A | JP 2014-086151 A (TOYOTA MOTOR CORP.) 12 May 2014 (2014-05-12)<br>See paragraphs [0024]-[0045], claim 1 and figure 2. | 1-18 |
| A | KR 10-2022-0028271 A (LG ENERGY SOLUTION, LTD.) 08 March 2022 (2022-03-08)<br>See claim 1 and figures 1-3. | 1-18 |

| ☐ Further documents are listed in the continuation of Box C. | ☑ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 January 2025** | **09 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 711 745 A1

| INTERNATIONAL SEARCH REPORT | International application No. |
|---|---|
| Information on patent family members | PCT/KR2024/014721 |

| Patent document cited in search report | | | Publication date (day/month/year) | Patent family member(s) | | | Publication date (day/month/year) |
|---|---|---|---|---|---|---|---|
| KR | 10-2022-0097693 | A | 08 July 2022 | KR | 10-2563299 | B1 | 04 August 2023 |
| KR | 10-2022-0033312 | A | 16 March 2022 | None | | | |
| KR | 10-2019-0084470 | A | 17 July 2019 | CN | 110418956 | A | 05 November 2019 |
| | | | | CN | 110418956 | B | 11 March 2022 |
| | | | | EP | 3674687 | A1 | 01 July 2020 |
| | | | | EP | 3674687 | A4 | 25 November 2020 |
| | | | | KR | 10-2245127 | B1 | 28 April 2021 |
| | | | | US | 11448597 | B2 | 20 September 2022 |
| | | | | US | 2020-0240915 | A1 | 30 July 2020 |
| | | | | WO | 2019-135508 | A1 | 11 July 2019 |
| JP | 2014-086151 | A | 12 May 2014 | CN | 103779537 | A | 07 May 2014 |
| | | | | CN | 103779537 | B | 04 May 2016 |
| | | | | JP | 5751235 | B2 | 22 July 2015 |
| | | | | US | 2014-0113063 | A1 | 24 April 2014 |
| KR | 10-2022-0028271 | A | 08 March 2022 | CN | 115087856 | A | 20 September 2022 |
| | | | | EP | 4083608 | A1 | 02 November 2022 |
| | | | | EP | 4083608 | A4 | 28 June 2023 |
| | | | | JP | 2023-512535 | A | 27 March 2023 |
| | | | | JP | 2024-138271 | A | 08 October 2024 |
| | | | | US | 2023-0127402 | A1 | 27 April 2023 |
| | | | | WO | 2022-045454 | A1 | 03 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230130823

- KR 1020240130870